# EUROPEAN PATENT SPECIFICATION

(11) **EP 2 451 624 B1**
(45) Date of publication and mention of the grant of the patent: **24.04.2013**
(21) Application number: 10747319.1
(22) Date of filing: 08.07.2010
(51) Int. Cl.: B29C 45/27

(54) **MODULAR HOT DISTRIBUTION PLATE, FOR THE INJECTION MOULDING OF PLASTIC MATERIAL, ADAPTABLE TO MOULDS OF DIFFERENT SHAPES AND CONFIGURATIONS, AND CORRESPONDING METHOD**
AN GUSSFORMEN VERSCHIEDENER FORM UND KONFIGURATIONEN ADAPTIERBARE MODULARE HEIZPLATTE ZUM SPRITZGIESSEN VON KUNSTSTOFFMATERIAL SOWIE ENTSPRECHENDES VERFAHREN
PLAQUE DE DISTRIBUTION CHAUDE MODULAIRE, POUR LE MOULAGE PAR INJECTION DE MATIÈRE PLASTIQUE, POUVANT ÊTRE ADAPTÉE À DES MOULES DE DIFFÉRENTES FORMES ET CONFIGURATIONS, ET PROCÉDÉ CORRESPONDANT

(30) Priority: 10.07.2009 IT BI20090006
(43) Date of publication of application: 16.05.2012
(73) Proprietor: Thermoplay S.p.A., 11026 Pont Saint Martin (Aosta) (IT)
(72) Inventor: ENRIETTI, Roberto, I-11026 Pont SAIN Martin (AO) (IT)
(86) International application number: PCT/IT2010/000304
(87) International publication number: WO 2011/004418

(56) References cited:
- EP-A1- 1 488 905
- EP-A2- 0 437 777
- FR-A1- 2 564 372
- JP-A- 2006 007 658
- US-A1- 2006 228 442

## Description

### Technical field

The present invention relates in general to the field of the injection moulding of plastic material, and more in particular it relates to a hot distribution plate, made of modular elements, for the distribution and the injection of the molten plastic material, which is suitable for being adapted to moulds having different shapes and configurations, and typically a different arrangement, between a mould and another, of the injection points of the molten plastic material.

The present invention also relates to a corresponding modular system for the distribution and the injection of the molten plastic material into a mould, to a corresponding method for adapting a modular hot distribution plate, for the injection moulding of plastic material, to a mould which exhibits a determined configuration of the respective injection points, and to a mould which integrates the modular hot distribution plate of the invention.

### Background art

The hot distribution plates for the moulding of plastic material, also called "hot plate", or "hot manifold", or simply "manifold", or, in a more wide context, also "hot runner system", have in general the function, in a machine or system for the injection moulding of plastic material, of receiving from a feeding member the plastic material, in a molten state and in pressure, and then of distributing it, through a network of hot channels formed inside the hot distribution plate, to one or more injection nozzles, usually housed in the same hot distribution plate and in turn provided for directly injecting the plastic material into the cavities of a mould.

These distribution plates are usually incorporated into the mould, and typically along a side of the latter, so as to constitute, once mounted, an integral portion of the structure of the mould.

Of course the moulds exhibit different shapes and dimensions, depending on the specific piece which has to be moulded with each of them, whereby they usually show different configurations, both in number and arrangement, between a given mould and another, of the injection zones or points in which the plastic material, distributed by the hot distribution plate, is injected into the inside of the mould.

More in detail, the number and the arrangement of the injection points in a mould are established, during the design of the mould, so as to allow the molten plastic material, distributed by the hot distribution plate, to flow in an optimal and uniform way into the various cavities of the mould, so as to fill completely them and thereby mould correctly the shape and all the portions of the piece.

Consequently also the hot distribution plates exhibit both a shape and a configuration, in particular as for the arrangement of the network of the internal hot channels and of the zones in which the injection nozzles are housed, which depend closely on the mould in which the hot plate has to be integrated, i.e. on the shape of the piece to be moulded.

In other words, in the known distribution plates, the configuration of the network of hot channels and the arrangement of the zones of the injection nozzles, in turn corresponding to the arrangement of the injection points of the molten plastic material into the inside of the mould, are directly depending on the shape and configuration of the mould, of which these hot distribution plates are an integral part.

It follows also that, in the actual technique, the hot distribution plates are usually designed and manufactured as a function of the shape and configuration of the respective mould in which they are intended to be mounted and integrated in order to distribute the molten plastic material, whereby each hot distribution plate is manufactured exactly according to the shape of the mould, i.e. of the respective piece to be moulded, in which the hot distribution plate is then integrated.

Obviously, this implies relevant and non negligible industrial costs in the design and manufacture of the hot distribution plates, since each new hot distribution plate, to be manufactured, is usually unique and different from any other one previously manufactured, whereby it requires a specific design and manufacture, corresponding to the specific configuration of the hot channels and to the specific arrangement of the areas in which the injection nozzles are housed.

Moreover such hot distribution plate, since being unique and having been designed for a determined mould or piece to be moulded, usually is not suitable for being subsequently used on another mould which exhibits a different shape, namely a different arrangement of the injection points.

It is therefore clear that, in the actual technique of the injection moulding of plastic materials, any innovation directed to overcome the drawbacks above mentioned, i.e. to reduce the costs for preparing the moulds that are used for the moulding of pieces of different shapes and for equipping them with the respective hot distribution plates, is always accepted with great interest and favour.

In particular a need of such innovations is particularly felt in the field of the moulding of specific kinds of pieces, as for instance the bumpers for motor cars and vehicles.

In fact, the moulds used in the moulding of bumpers, though being apparently very similar, exhibit a number and an arrangement of the respective injection points that vary greatly from a mould to the other, as a function of the shape and dimensions of the model of bumper to be moulded, whereby they require, with consequent relevant and additional costs, a specific hot distribution plate for each mould, i.e. for each model of bumper.

Similar needs are felt in the field of the moulding of prototypal parts, where it is often necessary to make moulding tests on numerous moulds of different configurations, in order to define the final optimal shape of a piece.

It is also mentioned, in the prior art, patent document JP 2006 007658 A which describes an injection moulding machine comprising a main supply part that is associated with a main supply nozzle, a plurality of injection sub-nozzles communicating with the cavity of a mould, and a plurality or articulated supply arm parts each fitted with a corresponding injection sub-nozzle, wherein each articulated supply arm part has an interval supply path for making the main supply none communicate with the corresponding injection sub-nozzle and can be deformed to adapt the same supply arm part to the position of the sub-nozzle in the mould.

### Disclosure of invention

Therefore a first object of the present invention is to propose a hot distribution plate, for the injection moulding of plastic material, which is capable of meeting the needs and obviating to the drawbacks above mentioned, and in particular is such as avoid the need of having to design and manufacture a specific hot distribution plate for each mould that is different from another, i.e. exhibits a different configuration of the injection points, so as to obtain a considerable reduction of the costs in the preparation and handling of the moulds that are used in the injection moulding of plastic material.

A second object, connected with the first one, of the present invention is also to meet specific needs of optimization and reduction of the costs in the preparation and construction of moulds for the injection moulding of determined categories of pieces, for instance, as before mentioned, the bumpers for auto vehicles and similar pieces.

These objects can be considered to be fully achieved by the modular hot distribution plate having the characteristics defined by the first independent claim 1 and by a method in accordance with claim 9.

Particular embodiments of the modular hot distribution plate of the invention are also defined by the dependent claims.

### Brief description of drawings

These and other objects, characteristics and advantages of the present invention will clearly appear from the following description of a preferred embodiment thereof, provided solely by way of a non-limiting example with reference to the accompanying drawings, where:
Fig. 1 is a plan view of a modular hot distribution plate, according to the present invention, in a first adapting configuration to a first mould;
Fig. 2 is a lateral view, with some parts in section, of the modular hot distribution plate of Fig. 1;
Fig. 3 is a partial section view according to the line III-III of Fig. 1;
Fig. 4 is a plan view of the modular hot distribution plate of Fig. 1, in a second adapting configuration to a second mould;
Fig. 5 is a partial perspective view of a main module of the hot distribution plate of Fig. 1;
Fig. 6 is a section view, according to the plane defined by the line VI-VI of Fig. 5;
Fig. 7 is a perspective view of an intermediate module, or satellite module, of the hot distribution plate of Fig. 1;
Fig. 8 is a perspective view of an injection module of the hot distribution plate of Fig. 1;
Fig. 9 is a section view, in an enlarged scale, of a zone of rotational coupling between the main module of Fig. 5 and the satellite module of Fig. 7; and
Fig.10 is a plan view of the rotational coupling zone of Fig. 9.

### Best mode for carrying out the invention

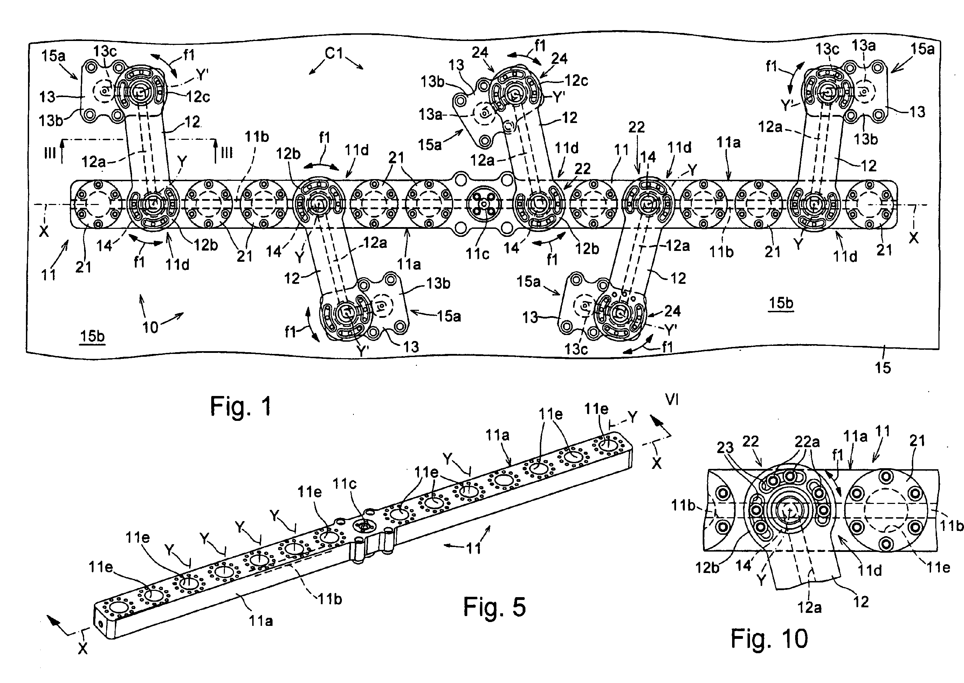

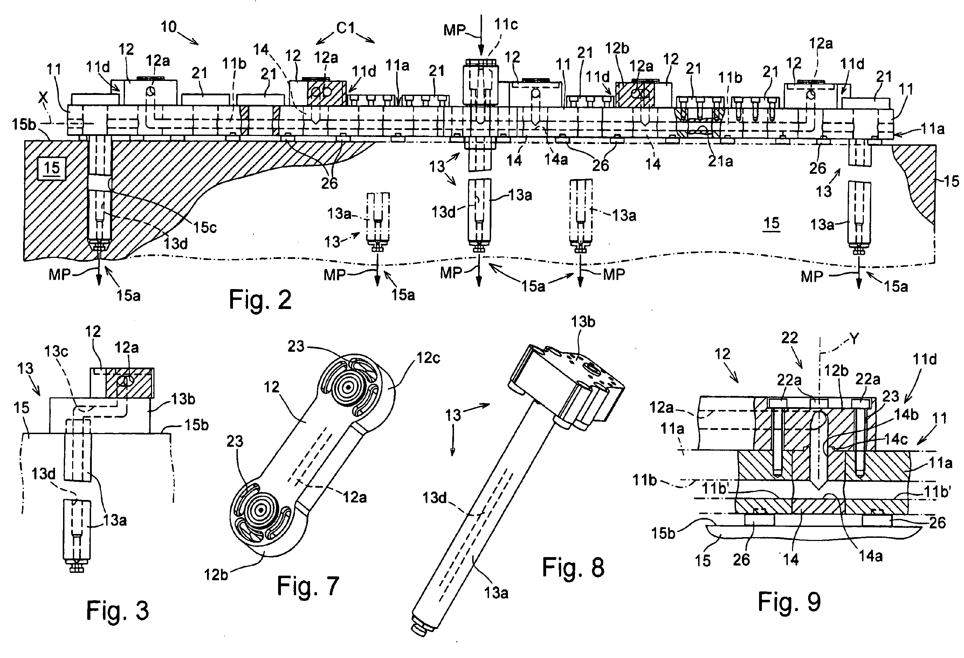

With reference to Figs. 1 and 2, a hot distribution plate, suitable for use in the field of the injection moulding of plastic material in order to distribute the molten plastic material and inject it into a mould, and having the characteristics of the present invention so as to be adaptable to moulds of different shapes and configurations, is indicated in the whole with 10.

In detail, in Figs. 1 and 2 the hot distribution plate 10 of the invention is represented in a first configuration of adaptation or adapting configuration, indicated with C1, in which the hot distribution plate 10 is mounted and integrated into a first mould, indicated generally with 15 and represented in a schematic way with dot-dash line, in order to distribute and inject a plastic material MP in the molten state into the cavities of the mould 15.

This adapting configuration C1 in turn corresponds, as in the following better explained, to a determined arrangement or configuration of the injection points 15a, of the first mould 15, through which the molten plastic material MP, distributed by the hot distribution plate 10, is injected into the cavities of the mould 15, with this determined arrangement or configuration of the injection points 15a being defined on an external side or surface 15b, substantially plane, of the body of the same mould 15.

According to an essential characteristic of the invention, the hot distribution plate, 10 exhibits a modular configuration, i.e. defined by a plurality of modules, comprising:
- a main module 11 constituted by a main body 11 a, having a generally elongated shape extending along a longitudinal direction, which is provided internally with a main hot channel 11 b, for the flow of the molten plastic material MP;
- a plurality of injection modules 13, arranged in the zones of the injection points 15a of the mould 15 and each provided with an injection nozzle 13a suitable for receiving the molten plastic material MP and for injecting it into the mould 15; and
- a plurality of intermediate modules, also called satellite modules 12 and also them having an elongated shape, that are interposed between the main module 11 and the injection modules 13 and are each provided internally with an intermediate hot channel 12a for the flow of the molten plastic material MP,
wherein each one of the satellite modules 12 is coupled rotationally, at a respective first end 12b and about a first axis Y perpendicular to the external side or surface 15b, substantially plain, of the mould 15, to the main module 11, and, at a respective second end 12c and about a second axis Y', also it perpendicular to the external plain side or surface 15b of the mould 15, to a corresponding injection module 13.

In detail, the main module 11 includes a central opening, indicated with 11c, through which the hot distribution plate 10 receives, from a feeding system provided in the moulding machine in which the mould 15 is installed, the molten plastic material MP, for distributing and then injecting it into the mould 15.

The main module 11 defines along its longitudinal extension, i.e. in the sense of its length, a plurality of coupling areas or zones, indicated with 11d, where the main module 11 is coupled, in the configuration C1, to the first end 12b of a satellite module 12.

The coupling of these coupling areas 11d with the first ends 12b of the satellite modules 11 is, as already said, of the rotational type, about the axis Y, so as to allow relative angular movements of the main module 11 and each satellite module 12, during the step of mounting and adapting the hot distribution plate 10 to the mould 15, as in the following better described.

Moreover the main body 11 a defines a plurality of cylindrical seats 11e, that correspond to the coupling zones 11d and are formed through the thickness of the main body 11a, and are each extending along the respective axis Y, in turn perpendicular to the longitudinal axis X of the main hot channel 11 b which extends along the length of the main body 11a.

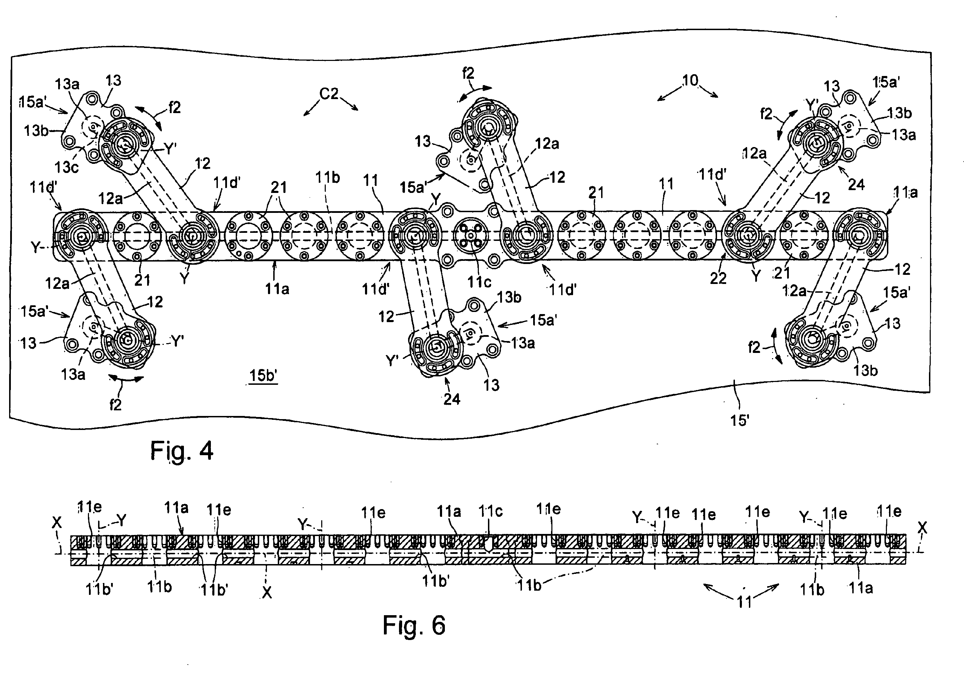

These cylindrical seats 11e are arranged at a distance or pitch, substantially constant, one from the other, along the longitudinal extension of the main module 11, and exhibit each a greater diameter than that of the main hot channel 11b, whereby the cylindrical seats 11e are such as to intersect and hence to divide the main channel 11 b in a plurality of sections 11b' (Fig. 6), each defined between a seat 11e and that one arranged adjacently along the main body 11 a.

For clarity, Figs. 5 and 6 represent the main body 11a, alone, i.e. without the other portions of the main module 11, so as to show the respective seats 11e and the main hot channel 11b, that is intersected by them.

In correspondence of each of the coupling zone 11 d, the respective cylindrical seat 11e, as represented in Figs. 1 and 2 and more in detail in Fig. 9, houses coaxially a corresponding coupling body 14, of cylindrical shape, in turn suitable for coupling rotationally, about the axis Y, with the first end 12b of the corresponding module satellite 12.

Each one of these coupling bodies 14 is crossed in a transversal sense by a through hole 14a, having a diameter equal to that of the main channel 11 b.

Therefore, when the coupling body 14 is housed in the respective seat 11e, as shown in Figs. 1, 2 and 9, the through hole 14a connects and put into communication the two adjacent sections 11 b', of the main channel 11 b, separate by the seat 11 e.

The coupling body 14 is provided for being housed into the respective seat 11e, for instance, in a forced way, so as to be integrated into the structure of the main body 11a and thereby ensure a perfect continuity and sealing of the main channel 11b, which extends along the longitudinal extension of the main module 11, against any leakage of the molten plastic material MP flowing through this main channel 11 b.

Moreover, each one of these coupling bodies 14 includes, along its Y axis, an inside hole 14b, which has the function of putting into communication, when the coupling body 14 is mounted in the seat 11e, the hole 14a, and therefore the main channel 11 b of the main module 11, with the intermediate hot channel 12a which extends internally along the module satellite 12, in turn coupled rotationally with the coupling body 14.

Still, as shown in Fig. 9, a cylindrical projection 14c and a corresponding cylindrical seat, formed respectively on the coupling body 14 and on the end 12b of the satellite module 12, are reciprocally coupled and provided for cooperating each other in order to allow both a correct centering of the end 12b with respect to the coupling body 14, and relative rotations between the satellite module 12 and the main module 11.

By summarizing, the coupling body 14, mounted in the respective seat 11e, and the end 12b of the satellite module 12, coupled with this coupling body 14, form a pivoting assembly, about the axis Y, which defines the rotational coupling between the main module 11 and the satellite module 12, so as to allow angular relative movements between these two modules, during the step for adapting, as described in the following, the hot distribution plate 10 to the mould 15.

Moreover closing bodies 21 are housed in those seats 11e, formed in the main body 11a of the main module 11, which, in the configuration C1 of the hot distribution plate 10, do not correspond to the coupling areas 11d, and therefore have not been used to house in them a respective coupling body 14.

In the detail, each of these closing bodies 21 include, likewise the coupling bodies 14, a through transversal hole 21 a, having a diameter equal to that of the main channel 11 b.

Therefore also the closing body 21, when housed in a respective seat 11e, is such as to connect, through the transversal hole 21a, the two adjacent sections 11b', of the main channel 11b, that are separate by the seat 11e, and thereby to ensure the continuity of the channel 11 b along the longitudinal extension of the main module 11.

However, differently from the coupling body 14, the closing body21 does not include any axial hole intersecting the transversal hole 21a, whereby the closing body 21, once mounted in the seat 11e, has only the function of closing it completely, so as to prevent any leakage, toward the outside, of the plastic material MP which flows along the hot channel 11 a of the main module 11.

As already anticipated, each module satellite 12, of the hot distribution plate 10, internally defines a respective intermediate hot channel 12a, which extends along the module satellite 12.

This intermediate hot channel 12a, at a side, i.e. in the zone of the first end 12b of the satellite module 12, is in communication, as before said, through the hole axial 14b formed in the coupling body 14 housed in the seat 11e, with the main channel 11a of the main module 11, and, at the opposite side, i.e. in the area of the second end 12c of the satellite module 12, is in communication with the inside of a corresponding injection module 13.

In this way, each module satellite 12 is suitable for connecting and putting into communication, through the respective intermediate channel 12a, the main hot channel 11a with the inside of the corresponding injection module 13, so as to allow the plastic material MP to flow from the main module 11 to the injection nozzle 13a of the injection module 13, for being injected into the mould 15.

Moreover, as already said, in order to allow the adaptation of the hot distribution plate 10 to the mould 15, each satellite module 12, other than being coupled rotationally, in correspondence of the respective first end 12b, in the coupling area 11d and about the axis Y, with the main module 11, is coupled rotationally in a similar way, in correspondence of the respective second end 12c, opposite to the first end 12b, and about the axis Y', with the corresponding injection module 13.

In detail, each injection module 13 includes, in addition to the injection nozzle 13a, also an upper body 13b, which constitutes a support for the injection nozzle 13a, and which, as shown in Fig. 3, is internally provided with a channel 13c, in turn suitable for putting into communication the hot channel 12a, defined inside the module satellite 12 coupled with the injection module 13, with a flow channel 13d, which is formed along the axis of the injection nozzle 13a and has the function of conveying the molten plastic material MP, received from the injection module 13, in order to directly inject it into the mould 15.

The upper bodies 13b of the various injection modules 13 are arranged into contact with the external side 15b, substantially plain, of the mould 15, while the respective injection nozzles 13a are inserted into corresponding seats 15c formed inside the body of the mould 15, in the areas of the injection points 15a.

Moreover first and a second fixing means, indicated generally with 22 and 24, are provided for firmly and rigidly fixing the first end 12b of each satellite module 12 to the main module 11, and respectively the second end 12c of the same satellite module 12 to the corresponding injection module 13, once the hot distribution plate 10 has been adapted to the particular and specific configuration of the mould 15, as better described hereafter.

For instance, as represented in Fig. 10, the first fixing means 22 are constituted by a plurality of screws 22a which are suitable for tightening the end 12b of each satellite module 12 on the body 11 a of the main module 11, wherein these screws 22a are housed in circular slots 23, that are formed, in this end 12b, around the axis Y defined by each rotational coupling area 11 d.

Therefore these slots 23 allow a mutual rotation between each module satellite 2 and the main module 11, during the step for adapting the hot distribution plate 10 to the mould 15, before definitely screwing and tightening the screws 22a on the main body 11 a.

Likewise the first fixing means 22, the second fixing means 24 can be constituted by a plurality of screws, that are suitable for tightening the end 12c of each satellite module 12 on the body 11 b of the injection module 13, wherein these screws are housed in slots formed in such end 12c, so as to allow relative angular rotations between the satellite module 13 and the injection module 13.

The number and the dimensions of the various modules 11, 12 and 13, which constitute the hot distribution plate 10, are selected, at least as a general rule, as a function of the dimensions and of the specific shape of the mould 15, in which the same hot distribution plate 10 is integrated in the configuration C1 represented in Figs. 1 and 2.

To this purpose, the modules satellites 12 can advantageously be selected from a group constituted by similar satellite modules, having lengths corresponding to unified and discrete values, in turn suitable for covering a plurality of different shapes and configurations of the mould, namely as for the number and the reciprocal arrangement of the respective injection points, in which mould the hot distribution plate 10 is intended to be integrated.

In the use, the different parts of the hot distribution plate 10 are initially prepared for being mounted and integrated in a first mould 15, as that represented in Figs. 1 and 2, which exhibits, on the side 15b, a specific and determined arrangement or configuration C1 of the injection points 15a, in turn corresponding to the specific shape and dimensions of the piece to be moulded with this first mould 15.

Then the parts of the hot distribution plate 10 are assembled on and adapted to the first mould 15, in such a way to allow the feeding of the molten plastic material MP to all the injection points 15a which define this determined configuration C1 of the mould 15.

In concrete, during a first step of preparation, the various modules 11, 12 and 13, which constitute the hot distribution plate 10, are conveniently selected, as for configuration, number and dimensions, and in particular as for length, so as to allow to reach, through the respective flow hot channels formed at the inside of them, all the injection points 15a defined by the mould 15, once the hot distribution plate 10 will be adapted to and integrated into it.

In this preparation step, the coupling bodies 14 are conveniently housed in those seats 11e, of the main module 11, which correspond to the coupling areas 11 d, defined along the extension of the same main module 11, that are provided for coupling rotationally with the satellite modules 12, selected.

Still, the closing bodies 21 are housed conveniently in those seats 11e, of the main module 11, which are not arranged in the coupling areas 11d, and therefore have to be closed in order to prevent any leakage toward the outside of the plastic material MP which flows along the hot channel 11 b formed inside the main module 11.

In this way the main module 11 is completely assembled and made suitable for the rotational coupling with the satellite modules 12, selected, whereby the main module 11 is ready to be mounted on the mould 15.

Then the various modules are connected each to other and mounted on the side 15b of the mould 15, so as to assembly the hot distribution plate 10 and integrate it into the same mould 15.

In detail, the main module 11 is mounted on the side 15b of the mould 15 preferably by the interposition of spacers 26, that are simply coupled into contact with the side 15b so as to be suitable for sliding along it, whereby the main module 11, when it is subject to relevant variations of temperature during the use, is free to expand thermally in a longitudinal sense relatively to the mould 15.

Moreover, the injection modules 13 are mounted on the mould 15 in the zones of the respective injection points 15a, corresponding, as said, to the shape and dimensions of the specific piece that it has to be moulded with the mould 15.

Still, in this assembly step, the first ends 12b of the various satellite modules 12, that have been selected, are coupled rotationally about the respective axes Y with the corresponding coupling bodies 14 arranged in the respective coupling zones 11d, defined along the main module 11, and the second ends 12b of the same satellite modules 12, selected, are coupled rotationally about the respective axes Y' with the upper bodies 13b of the corresponding injection modules 13.

Therefore, the rotational couplings between the first end 12b of each satellite module 12 and the main module 11, from one hand, and between the second end 12c of the same satellite module 12 and the corresponding injection module 13, from another hand, allow to suitably vary the relative angular positions between such modules 11, 12 and 13, as generically pointed out by arrows f1 in Fig. 1, so as to adapt their relative angular arrangements and hence that of the hot distribution plate 10 to the specific and determined configuration of the mould 15, as in particular defined by the arrangement and number of the respective injection points 15a.

In this way the hot distribution plate 10 is adapted to the mould 10, so as to assume the configuration C1 represented in Fig. 1, and therefore to allow the molten plastic material MP, in the effective phase of moulding, to reach and feed, flowing along the hot channels formed inside the various modules of which the hot distribution plate 10 is made, all the injection points 15a of the mould 15.

Finally, the hot distribution plate 10, once it has been adapted on the side 15b, is rigidly and stably fixed to the structure of the mould 15, by screwing the screws of the fixing means 22 and 24 and thereby blocking the two ends 12b and 12c of each satellite module 12 respectively to the main module 1 and to the corresponding injection module 13.

At this point, the hot distribution plate 10 is ready for use, whereby the plastic material MP can flow from the main module 11 and, through the various channels formed inside the satellite modules 12, feed the various injection modules 13 for being injected into the mould 15, in the zone of the respective points of injection 15a.

Other than on the first mould 15, the hot distribution plate 10 can be used on and adapted to a second mould 15', schematically represented in Fig. 4, which is provided for the moulding of pieces of different forms from those moulded by the first mould 15, and which thereby exhibits a proper and specific configuration, of the respective injection points 15a', that is different, as arrangement and/or number, from that of the injection points 15a of the first mould 15, wherein these injection points 15a' are arranged, like the injection points 15a of the first mould 15, on a side or surface 15b', substantially plain, of the second mould 15',

In this case, similarly to what made for the first mould 15, the main module 11 of the hot distribution plate 10 is prepared by selecting, along its longitudinal extension, suitable coupling zones, indicated with 11d', provided for coupling rotationally with the ends of corresponding satellite modules 12, of convenient length, capable of allowing the hot distribution plate 10 to adapt to the second mould 15'.

Then the modules 11, 12 and 13 of the hot distribution plate 10 are connected and coupled rotationally each other and assembled on the side 15b' of the mould 15', in particular by housing the injection modules 13 in the zones of the injection points 15a', and by varying the angular arrangement of the various modules, one with respect to the other, as represented with arrows f2, in order to adapt the hot distribution plate 10 to the specific and determined configuration of the mould 15', as defined by the respective injection points 15a.'

In this way the hot distribution plate 10, once mounted on the mould 15', assumes the configuration C2, as represented in Fig. 4, corresponding to the determined configuration of the injection points 15a' of the second mould 15', on the respective side 15b'.

Finally, like for the first mould 15, the various modules of the modular hot distribution 10 are rigidly and stably fixed one with respect to the other and to the structure of the second mould 15', by the fixing means 22 and 24.

It is therefore clear, from the preceding description, that the present invention fully achieve the objects to which it was intended, and provides a hot distribution plate which is suitable for being advantageously adapted to moulds exhibiting different forms and configurations, and in particular different arrangements of the respective injection points, and which, once adapted, is suitable for being rigidly fixed on the structure of the mould, so as to became an integral part of it.

In order to widen the capability of the hot distribution plate of adapting to the mould on which it is mounted, two or more satellite modules, rotationally coupled one with the other, can be interposed between the main module and any one of the injection modules, with each of these two or more satellite modules being internally provided with a respective intermediate hot channel, for the flow of the plastic material MP, suitable for putting into communication the hot channel formed in the main module with the injection nozzle of such any injection module.

Still, according to one of the possible combinations for connecting reciprocally the various modules of the hot distribution plate of the invention, two or more injection modules can be coupled rotationally with a unique and common satellite module, in turn suitable for distributing the molten plastic material to these two or more injection modules.

## Claims

1. Modular hot distribution plate (10), for the injection moulding of plastic material, adaptable to moulds (15, 15') of different shapes and configurations (C1, C2), comprising:
- at least one main module (11) provided internally with a main hot channel (11b) for the flow of the molten plastic material (MP);
- one or more intermediate modules, or satellite modules (12), having a substantially elongated shape and each provided internally with a respective intermediate hot channel (12a) for the flow of the molten plastic material (MP); and
- one or more injection modules (13), each provided with an injection nozzle (13a) suitable for receiving the molten plastic material (MP) and injecting it into a mould (15, 15'),
wherein said one or more satellite modules (12) are suitable for being interposed between said main module (11) and said one or more injection modules (13), with at least one satellite module (12) interposed between the main module (11) and each injection module (13), so as to connect and put into communication, through the respective intermediate hot channels (12a), the main hot channel (11b), provided in the main module (11), with the injection nozzles (13a) of said one or more injection modules (13), and thereby allow the molten plastic material (MP) to flow from said main hot channel (11a) to each injection nozzle (13a), for being injected into the mould (15, 15');
wherein each satellite module (12) is suitable for coupling rotationally, at the ends (12b, 12c), to said main module (11) and to a corresponding injection module (13) or another satellite module, respectively about a first (Y) and a second axis (Y') substantially perpendicular to a side or surface (15b, 15b'), substantially plain, of said mould (15, 15'), which exhibits a determined configuration (C1, C2) of the injection points (15a, 15a') of the mold (15,15'),
whereby, when said hot distribution plate (10) is mounted on said side or surface (15b, 15b'), substantially plain, in order to be integrated into said mould (15, 15'), said one or more satellite modules (12) and the corresponding injection modules (13) are suitable for rotating one relatively to the other and to said main module (11), about said first (Y) and second (Y') axes substantially perpendicular to said side or surface (15b, 15b') of the mould (15, 15'), so as to adapt (f1, f2) their relative angular arrangement to said determined configuration (C1, C2) of the injection points (15a, 15a') of the mould (15, 15'), on said side or surface (15b, 15b'), and
wherein fixing means (22, 24) are provided for stably fixing the modules (11. 12, 13) of said hot distribution plate (10) one with respect to the other and to the structure of said mould (15, 15'), once they have been angularly adapted (f1, f2) to said determined configuration (C1, C2) of the injection points (15a, 15a') of the mould (15, 15'),
wherein said main module (11) comprises a main body (11a), of generally elongated shape, at which inside and along which said main hot channel (11b) extends, **characterised in that**
said main body (11a) defines, along its longitudinal extension, one or more seats (11e), formed in the thickness of said main body (11a), which intersect said main hot channel (11b),
wherein said one or more seats (11e) house one or more respective coupling bodies (14) in the zones where the first ends (12b) of the satellite modules (12) are rotationally coupled with said main module (11), with each of said one or more coupling bodies (14) being suitable for putting into communication the main hot channel (11b) of said main module (11) with the intermediate channel (12a) of the satellite module (12) coupled with the main module (11), and
wherein said one or more seats (11e) house one or more respective closing bodies (21) in the zones of the main module (11) that are not used for coupling rotationally said one or more satellite modules (12) to said main module (11), with said one or more closing bodies (21) being suitable for closing the respective seats (11e) in which they are housed, so as to prevent any outflow towards the outside of the molten plastic material (MP) which flows along said main hot channel (11a).

2. Modular hot distribution plate (10) according to claim 1, wherein a single module satellite (12) is provided for being interposed between said main module (11) and the corresponding injection module (13), and for coupling rotationally, at the respective first end (12b) and about said first axis (Y), with said main module (11), and, at the respective second end (12c), opposite to the first end, and about said second axis (Y'), with said corresponding injection module (13).

3. Modular hot distribution plate according to claim 1 or 2, wherein said seats (11e) have a cylindrical shape and exhibit a greater diameter than that of the main hot channel (11b) formed internally in said main module (11).

4. Modular hot distribution plate (10) according to claim 1, wherein each of said one or more satellite modules (12) is selected from a plurality of satellite modules having different lengths defined by distinct values, unified, such as to cover a plurality of moulds (15, 15') exhibiting different arrangements and configurations (C1, C2) of the respective injection points (15a, 15a').

5. Modular hot distribution plate according to any one of the preceding claims, wherein said fixing means (22, 24) comprise one or more screws (22a) associated with respective one or more circular slots (23) that are formed coaxially to said first axis (Y) of rotation, in the zone of the rotational coupling between the main module (11) and the first end (12b) of each module satellite (12), and coaxially to said second axis (Y') of rotation, in the zone of the rotational coupling between the second end (12c) of the satellite module (12) and the injection module (13),
whereby said slots (23) are suitable for allowing a relative angular movement (f1, f2) between the various modules (11, 12, 13), rotationally coupled to each other, while adapting said hot distribution plate (10) to said determined configuration (C1, C2) of the injection points (15a, 15a') of the mould (15, 15'), and
said screws (22a) are suitable for being tightened in order to stably fix the coupled modules (11, 12, 13) one to the other and to the structure of said mould (15, 15'), once the hot distribution plate (10) has been adapted to said determined configuration (C1, C2) of the injection points (15a, 15a').

6. Modular hot distribution plate according to claim 1, wherein two or more satellite modules are interposed between said main module and any one of the injection modules for putting into communication the hot channel, provided in said main module, with the ejection nozzle of said any one of the injection modules, and wherein said two or more satellite modules are rotationally coupled at a respective end, so as to be suitable for rotating relatively one to the other, while adapting said hot distribution plate to the mould.

7. Modular hot distribution plate (10) according to claim 1, wherein the various satellite modules (12), included in said hot distribution plate (10), are selected from a group constituted by a plurality of satellite modules of similar shape but having different lengths, corresponding to unified values, suitable for covering a plurality of moulds (15, 15') which exhibit different configurations (C1, C2) of the respective injection points (15a, 15a').

8. Mould (15, 15') for the injection moulding of plastic material (MP), integrating a modular hot distribution plate (10) according to any one of the preceding claims.

9. Method for adapting a modular hot distribution plate, for the injection moulding of plastic material (MP), to a mould (15, 15') having a determined configuration (C1, C2) of the respective injection points (15a, 15a'), the method comprising the following steps:
a) providing at least one main module (11), defining at its inside a respective main hot channel (11a) for the flow of the molten plastic material (MP), said main module (11) comprising a main body (11a), of generally elongated shape, at which inside and along which said main hot channel (11b) extends, with said main body (11a) defining, along its longitudinal extension, one or more seats (11e), formed in the thickness of said main body (11a), which intersect said main hot channel (11b);
b) providing one or more injection modules (13), each having an injection nozzle (13a) suitable for receiving the molten plastic material (MP) and for injecting it into said mould (15, 15');
c) providing one or more intermediate modules, or satellite modules (12), having a substantially elongated shape and each defining at its inside a respective intermediate hot channel (12a) for the flow of the molten plastic material (MP), with each satellite module (12) being suitable for coupling rotationally at the ends (12b, 12c) to said main module (11) and to a corresponding injection module (13), respectively about a first (Y) and a second axis (Y') substantially perpendicular to a side or surface (15b, 15b'), substantially plain, of said mould (15, 15'), exhibiting said determined configuration (C1, C2) of the injection points (15a, 15a') of the mould (15, 15'),
d) mounting said main module (11) on said side or surface (15b, 15b') of the mould (15, 15');
e) mounting said one or more injection modules (13) on said side or surface (15b, 15b') of the mould (15, 15'), in the zones of said injection points (15a, 15a');
f) interposing said one or more satellite modules (12) between said main module (11) and said one or more injection modules (13), with at least one satellite module interposed between said main module (11) and each injection module (13);
g) coupling and connecting rotationally the ends (12a, 12b) of said one or more satellite modules (12) with the main module (11) and with said one or more injection modules (13), so as to put into communication, through the intermediate hot channels (12a) provided in the satellite modules (12), the main hot channel (11a), provided in the main module (11), with the injection nozzle (13a) of each injection module (13);
h) rotating, during mounting on said side or surface (15b, 15b') of the mould (15, 15'), said one or more satellite modules (12) and the injection modules (13), coupled with them, one relatively to the other and to said main module (11), about said first (Y) and second (Y') axes, substantially perpendicular to said side or surface (15b, 15b') of the mould (15, 15'), so as to adapt (f1, f2) their relative angular arrangement to said determined configuration (C1, C2), on said side or surface (15b, 15b'), of the injection points (15as, 15a') of the mould (15, 15'), and finally
i) fixing stably the modules (12, 13) of said modular hot distribution plate (10), once reciprocally and angularly adapted, one with respect to the other and to the structure of said mould (15, 15'),
wherein the step of coupling and connecting the ends of said one or more satellite modules (12) comprises the step of housing in said one or more seats (11e) of the main module (11) one or more respective coupling bodies (14) in the zones where the first ends (12b) of the satellite modules (12) are rotationally coupled with said main module (11), with each of said one or more coupling bodies (14) being suitable for putting into communication the main hot channel (11b) of said main module (11) with the intermediate channel (12a) of the satellite module (12) coupled with the main module (11), and
wherein one or more closing bodies (21) are housed in said one or more seats (11 e) in the zones of the main module (11) that are not used for coupling rotationally said one or more satellite modules (12) to said main module (11), with said one or more closing bodies (21) being suitable for closing the respective seats (11e) in which they are housed, so as to prevent any outflow towards the outside of the molten plastic material (MP) which flows along said main hot channel (11a).

10. Method according to claim 9, wherein the various satellite modules (12), intended to be interposed between said main module (11) and said injection modules (13) while mounting said modular hot distribution plate (10) on said side or surface (15b, 15b') of the mould (15, 15'), are selected from a group constituted by a plurality of satellite modules of similar shape but having different lengths, corresponding to unified values, suitable for covering a plurality of moulds (15, 15') exhibiting different configurations (C1, C2) of the respective injection points (15a, 15a').

## Patentansprüche

1. Modulare Heißverteilerplatte (10) zum Spritzgießen von Kunststoffmaterial, die an Gießformen (15, 15') verschiedener Formen und Konfigurationen (C1, C2) anpassbar ist, umfassend:
- mindestens ein Hauptmodul (11), dass inwendig mit einem Hauptheißkanal (11b) für den Fluss des geschmolzenen Kunststoffmaterials (MP) versehen ist;
- ein oder mehrere Zwischenmodule oder Satellitenmodule (12) mit im Wesentlichen langgestreckter Form, die jeweils inwendig mit einem jeweiligen Zwischenheißkanal (12a) für den Fluss des geschmolzenen Kunststoffmaterials (MP) versehen sind; und
- ein oder mehrere Einspritzmodule (13), die jeweils mit einer Einspritzdüse (13a) versehen sind, die dazu geeignet ist, das geschmolzene Kunststoffmaterial (MP) aufzunehmen und es in eine Gießform (15, 15') einzuspritzen,
wobei das eine bzw. die mehreren Satellitenmodule (12) dazu geeignet sind, zwischen dem Hauptmodul (11) und dem einen bzw. den mehreren Einspritzmodulen (13) angeordnet zu werden, wobei zwischen dem Hauptmodul (11) und jedem Einspritzmodul (13) mindestens ein Satellitenmodul (12) angeordnet ist, um den in dem Hauptmodul (11) vorgesehenen Hauptheißkanal (11b) durch die jeweiligen Zwischenheißkanäle (12a) mit den Einspritzdüsen (13a) des einen bzw. der mehreren Einspritzmodule (13) zu verbinden und in Verbindung zu bringen und dadurch das geschmolzene Kunststoffmaterial (MP) von dem Hauptheißkanal (11a) zu jeder Einspritzdüse (13a) fließen zu lassen, um in die Gießform (15, 15') eingespritzt zu werden;
wobei jedes Satellitenmodul (12) dazu geeignet ist, an den Enden (12b, 12c), drehbar um eine erste (Y) bzw. eine zweite Achse (Y'), im Wesentlichen senkrecht zu einer im Wesentlichen glatten Seite oder Oberfläche (15b, 15b') der Gießform (15, 15'), die eine bestimmte Konfiguration (C1, C2) der Einspritzstellen (15a, 15a') der Gießform (15, 15') aufweist, an das Hauptmodul (11) und an ein entsprechendes Einspritzmodul (13) oder ein anderes Satellitenmodul zu koppeln,
wodurch, wenn die Heißverteilerplatte (10) an der im Wesentlichen glatten Seite oder Oberfläche (15b, 15b') angebracht ist, um in die Gießform (15, 15') integriert zu werden, das eine bzw. die mehreren Satellitenmodule (12) und die entsprechenden Einspritzmodule (13) dazu geeignet sind, relativ zueinander und zu dem Hauptmodul (11) um die erste (Y) und die zweite (Y') Achse, im Wesentlichen senkrecht zu der Seite oder Oberfläche (15b, 15b') der Gießform (15, 15'), zu drehen, um ihre relative Winkelanordnung an die bestimmte Konfiguration (C1, C2, der Einspritzstellen (15a, 15a') der Gießform (15, 15') an der Seite oder Oberfläche (15b, 15b') anzupassen (f1, f2), und
wobei Fixiermittel (22, 24) vorgesehen sind, um die Module (11, 12, 13) der Heißverteilerplatte (10) in Bezug zueinander und zu der Struktur der Gießform (15, 15') stabil zu fixieren, nachdem sie im Winkel an die bestimmte Konfiguration (C1, C2) der Einspritzstellen (15a, 15a') der Gießform (15, 15') angepasst (f1, f2) wurden,
wobei das Hauptmodul (11) einen Hauptkörper (11a) mit allgemein langgestreckter Form umfasst, an dessen Inneren und entlang dessen sich der Hauptheißkanal (11b) erstreckt, **dadurch gekennzeichnet, dass** der Hauptkörper (11a) entlang seiner Längsausdehnung einen oder mehrere in der Dicke des Hauptkörpers (11a) gebildete Aufnahmen (11e) definiert, die den Hauptheißkanal (11b) kreuzen,
wobei die eine bzw. die mehreren Aufnahmen (11e) einen oder mehrere jeweilige Kopplungskörper (14) in den Zonen unterbringen, wo die ersten Enden (12b) der Satellitenmodule (12) drehbar mit dem Hauptmodul (11) gekoppelt sind, wobei jeder des einen bzw. der mehreren Kopplungskörper (14) dazu geeignet ist, den Hauptheißkanal (11 b) des Hauptmoduls (11) mit dem Zwischenkanal (12a) des mit dem Hauptmodul (11) gekoppelten Satellitenmoduls (12) in Verbindung zu bringen, und
wobei die eine bzw. die mehreren Aufnahmen (11e) einen oder mehrere jeweilige Schließkörper (21) in den Zonen des Hauptmoduls (11) unterbringen, die nicht für das drehbare Koppeln des einen bzw. der mehreren Satellitenmodule (12) an das Hauptmodul (11) verwendet werden, wobei der eine bzw. die mehreren Schließkörper (21) dazu geeignet sind, die jeweiligen Aufnahmen (11e), in denen sie untergebracht sind, zu schließen, um etwaigen Ausfluss des geschmolzenen Kunststoffmaterials (MP), das entlang dem Hauptheißkanal (11a) fließt, nach außen zu verhindern.

2. Modulare Heißverteilerplatte (10) nach Anspruch 1, wobei ein Einzelmodulsatellit (12) vorgesehen ist, um zwischen dem Hauptmodul (11) und dem entsprechenden Einspritzmodul (13) angeordnet zu sein und um an dem jeweiligen ersten Ende (12b) und um die erste Achse (Y) mit dem Hauptmodul (11) und an dem jeweiligen zweiten Ende (12c), gegenüber dem ersten Ende und um die zweite Achse (Y') mit dem entsprechenden Einspritzmodul (13) drehbar zu koppeln.

3. Modulare Heißverteilerplatte nach Anspruch 1 oder 2, wobei die Aufnahmen (11e) eine zylindrische Form haben und einen größeren Durchmesser aufweisen als derjenige des inwendig in dem Hauptmodul (11) gebildeten Hauptheißkanals (11b).

4. Modulare Heißverteilerplatte (10) nach Anspruch 1, wobei jedes des einen bzw. der mehreren Satellitenmodule (12) aus mehreren Satellitenmodulen ausgewählt ist, die durch unterschiedliche, vereinheitlichte Werte definierte, verschiedene Längen aufweisen, um mehrere Gießformen (15, 15') abzudecken, die verschiedene Anordnungen und Konfigurationen (C1, C2) der jeweiligen Einspritzstellen (15a, 15a') aufweisen.

5. Modulare Heißverteilerplatte nach einem der vorangehenden Ansprüche, wobei die Fixiermittel (22, 24) eine oder mehrere Schrauben (22a) umfassen, die mit jeweiligen einem oder mehreren kreisförmigen Schlitzen (23) assoziiert sind, die koaxial zu der ersten Drehachse (Y) in der Zone der drehbaren Kopplung zwischen dem Hauptmodul (11) und dem ersten Ende (12b) jedes Modulsatelliten (12) und koaxial zu der zweiten Drehachse (Y') in der Zone der drehbaren Kopplung zwischen dem zweiten Ende (12c) des Satellitenmoduls (12) und dem Einspritzmodul (13) gebildet sind,
wodurch die Schlitze (23) dazu geeignet sind, eine relative Winkelbewegung (f1, f2) zwischen den verschiedenen drehbar aneinander gekoppelten Modulen (11, 12, 13) zuzulassen, während die Heißverteilerplatte (10) an die bestimmte Konfiguration (C1, C2) der Einspritzstellen (15a, 15a') der Gießform (15, 15') angepasst wird, und
wobei die Schrauben (22a) dazu geeignet sind, festgezogen zu werden, um die gekoppelten Module (11, 12, 13) stabil aneinander und an der Struktur der Gießform (15, 15') zu fixieren, nachdem die Heißverteilerplatte (10) an die bestimmte Konfiguration (C1, C2) der Einspritzstellen (15a, 15a') angepasst wurde.

6. Modulare Heißverteilerplatte nach Anspruch 1, wobei zwei oder mehr Satellitenmodule zwischen dem Hauptmodul und einem beliebigen der Einspritzmodule angeordnet sind, um den in dem Hauptmodul vorgesehenen Heißkanal mit der Ausstoßdüse des beliebigen der Einspritzmodule in Verbindung zu bringen, und wobei die zwei oder mehr Satellitenmodule an einem jeweiligen Ende drehbar gekoppelt sind, um dazu geeignet zu sein, relativ zueinander zu drehen, während die Heißverteilerplatte an die Gießform angepasst wird.

7. Modulare Heißverteilerplatte (10) nach Anspruch 1, wobei die in der Heißverteilerplatte (10) beinhalteten verschiedenen Satellitenmodule (12) aus einer Gruppe ausgewählt sind, die von mehreren Satellitenmodulen mit ähnlicher Form aber vereinheitlichten Werten entsprechenden, verschiedenen Längen gebildet wird, die dazu geeignet sind, mehrere Gießformen (15, 15') abzudecken, die verschiedene Konfigurationen (C1, C2) der jeweiligen Einspritzstellen (15a, 15a') aufweisen.

8. Gießform (15, 15') zum Spritzgießen von Kunststoffmaterial (MP), die eine modulare Heißverteilerplatte (10) nach einem der vorangehenden Ansprüche integriert.

9. Verfahren zum Anpassen einer modularen Heißverteilerplatte zum Spritzgießen von Kunststoffmaterial (MP) an eine Gießform (15, 15') mit einer bestimmten Konfiguration (C1, C2) der jeweiligen Einspritzstellen (15a, 15a'), wobei das Verfahren folgende Schritte umfasst:
a) Bereitstellen von mindestens einem Hauptmodul (11), das an seinem Inneren einen jeweiligen Hauptheißkanal (11a) für den Fluss des geschmolzenen Kunststoffmaterials (MP) definiert, wobei das Hauptmodul (11) einen Hauptkörper (11a) mit allgemein langgestreckter Form umfasst, an dessen Inneren und entlang dessen sich der Hauptheißkanal (11b) erstreckt, wobei der Hauptkörper (11a) entlang seiner Längsausdehnung einen oder mehrere in der Dicke des Hauptkörpers (11a) gebildete Aufnahmen (11e) definiert, die den Hauptheißkanal (11 b) kreuzen;
b) Bereitstellen von einem oder mehreren Einspritzmodulen (13) mit jeweils einer Einspritzdüse (13a), die dazu geeignet sind, das geschmolzene Kunststoffmaterial (MP) aufzunehmen und es in die Gießform (15, 15') einzuspritzen,
c) Bereitstellen von einem oder mehreren Zwischenmodulen oder Satellitenmodulen (12) mit einer im Wesentlichen langgestreckten Form, die jeweils an ihrem Inneren einen jeweiligen Zwischenheißkanal (12a) für den Fluss des geschmolzenen Kunststoffmaterials (MP) definieren, wobei jedes Satellitenmodul (12) dazu geeignet ist, an den Enden (12b, 12c) drehbar um eine erste (Y) bzw. eine zweite Achse (Y'), im Wesentlichen senkrecht zu einer im Wesentlichen glatten Seite oder Oberfläche (15b, 15b') der Gießform (15, 15'), die die bestimmte Konfiguration (C1, C2) der Einspritzstellen (15a, 15a') der Gießform (15, 15') aufweist, an das Hauptmodul (11) und an ein entsprechendes Einspritzmodul (13) zu koppeln,
d) Anbringen des Hauptmoduls (11) an der Seite oder Oberfläche (15b, 15b') der Gießform (15, 15');
e) Anbringen des einen bzw. der mehreren Einspritzmodule (13) an der Seite oder Oberfläche (15b, 15b') der Gießform (15, 15') in den Zonen der Einspritzstellen (15a, 15a');
f) Anordnen des einen bzw. der mehreren Satellitenmodule (12) zwischen dem Hauptmodul (11) und dem einen bzw. den mehreren Einspritzmodulen (13), wobei zwischen dem Hauptmodul (11) und jedem Einspritzmodul (13) mindestens ein Satellitenmodul angeordnet ist;
g) drehbares Koppeln und Verbinden der Enden (12a, 12b) von dem einen bzw. den mehreren Satellitenmodulen (12) mit dem Hauptmodul (11) und mit dem einen bzw. den mehreren Einspritzmodulen (13), um durch die in den Satellitenmodulen (12) vorgesehenen Zwischenheißkanäle (12a) den in dem Hauptmodul (11) vorgesehenen Hauptheißkanal (11a) mit der Einspritzdüse (13a) jedes Einspritzmoduls (13) in Verbindung zu bringen:
h) Drehen, während des Anbringens an der Seite oder Oberfläche (15b, 15b') der Gießform (15, 15'), des einen bzw. der mehreren Satellitenmodule (12) und der damit gekoppelten Einspritzmodule (13), relativ zueinander und zu dem Hauptmodul (11) um die erste (Y) und die zweite (Y') Achse, im Wesentlichen senkrecht zu der Seite oder Oberfläche (15b, 15b') der Gießform (15, 15'), um ihre relative Winkelanordnung an die bestimmte Konfiguration (C1, C2) der Einspritzstellen (15as, 15a') der Gießform (15, 15') an der Seite oder Oberfläche (15b, 15b') anzupassen (f1, f2), und schließlich
(i) stabiles Fixieren der Module (12, 13) der modularen Heißverteilerplatte (10), nachdem sie wechselseitig und im Winkel angepasst sind, in Bezug aufeinander und auf die Struktur der Gießform (15, 15'),
wobei der Schritt des Koppelns und Verbindens der Enden des einen bzw. der mehreren Satellitenmodule (12) folgenden Schritt umfasst: Unterbringen von einem oder mehreren jeweiligen Kopplungskörpern (14) in der einen bzw. den mehreren Aufnahmen (11e) des Hauptmoduls (11), in den Zonen, wo die ersten Enden (12b) der Satellitenmodule (12) drehbar mit dem Hauptmodul (11) gekoppelt sind, wobei jeder des einen bzw. der mehreren Kopplungskörper (14) dazu geeignet ist, den Hauptheißkanal (11b) des Hauptmoduls (11) mit dem Zwischenkanal (12a) des mit dem Hauptmodul (11) gekoppelten Satellitenmodus (12) in Verbindung zu bringen, und
wobei ein oder mehrere Schließkörper (21) in der einen bzw. den mehreren Aufnahmen (11e) in den Zonen des Hauptmoduls (11) untergebracht sind, die nicht für das drehbare Koppeln des einen bzw. der mehreren Satellitenmodule (12) an das Hauptmodul (11) verwendet werden, wobei der eine bzw. die mehreren Schließkörper (21) dazu geeignet sind, die jeweiligen Aufnahmen (11e), in denen sie untergebracht sind, zu schließen, um etwaigen Ausfluss des geschmolzenen Kunststoffmaterials (MP), das entlang dem Hauptheißkanal (11a) fließt, nach außen zu verhindern.

10. Verfahren nach Anspruch 9, wobei die verschiedenen Satellitenmodule (12), die dazu bestimmt sind, zwischen dem Hauptmodul (11) und den Einspritzmodulen (13) angeordnet zu werden, während die modulare Heißverteilerplatte (10) an der Seite oder Oberfläche (15b, 15b') der Gießform (15, 15') angebracht wird, aus einer Gruppe ausgewählt werden, die aus mehreren Satellitenmodulen mit ähnlicher Form aber verschiedenen Längen gebildet ist, die vereinheitlichten Werten entsprechen, die dazu geeignet sind, mehrere Gießformen (15, 15') abzudecken, die verschiedene Konfigurationen (C1, C2) der jeweiligen Einspritzstellen (15a, 15a') aufweisen.

## Revendications

1. Plaque de distribution chaude modulaire (10) pour le moulage par injection de matière plastique, adaptable à des moules (15, 15') de différentes formes et configurations (C1, C2), comprenant :
- au moins un module principal (11) pourvu intérieurement d'un canal chaud principal (11b) pour l'écoulement de la matière plastique fondue (MP) ;
- un ou plusieurs modules intermédiaires ou modules satellites (12) ayant une forme sensiblement allongée et chacun étant pourvu intérieurement d'un canal chaud intermédiaire respectif (12a) pour l'écoulement de la matière plastique fondue (MP) ; et
- un ou plusieurs modules d'injection (13), chacun étant pourvu d'une buse d'injection (13a) convenant pour recevoir la matière plastique fondue (MP) et l'injecter dans un moule (15, 15'),
dans laquelle lesdits un ou plusieurs modules satellites (12) conviennent pour être intercalés entre ledit module principal (11) et lesdits un ou plusieurs modules d'injection (13), avec au moins un module satellite (12) intercalé entre le module principal (11) et chaque module d'injection (13) de manière à raccorder et à mettre en communication, via les canaux chauds intermédiaires respectifs (12a), le canal chaud principal (11b), prévu dans le module principal (11), avec les buses d'injection (13a) desdits un ou plusieurs modules d'injection (13) et permettre ainsi à la matière plastique fondue (MP) de s'écouler dudit canal chaud principal (11a) à chaque buse d'injection (13a) pour être injectée dans le moule (15, 15') ;
dans laquelle chaque module satellite (12) convient pour coupler en rotation, aux extrémités (12b, 12c), avec ledit module principal (21) et un module d'injection correspondant (13) ou un autre module satellite, respectivement autour d'un premier (Y) et d'un second axe (Y') sensiblement perpendiculaires à un côté ou à une surface (15b, 15b'), sensiblement uni(e), dudit moule (15, 15') qui présente une configuration déterminée (C1, C2) des points d'injection (15a, 15a') du moule (15, 15'),
de sorte que, lorsque ladite plaque de distribution chaude (10) est montée sur ledit côté ou ladite surface (15b, 15b'), sensiblement uni(e), afin d'être intégrée audit moule (15, 15'), lesdits un ou plusieurs modules satellites (12) et les modules d'injection correspondants (13) conviennent pour tourner l'un par rapport à l'autre et par rapport audit module principal (11), autour desdits premier (Y) et second (Y') axes de manière sensiblement perpendiculaire audit côté ou à ladite surface (15b, 15b') du moule (15, 15') afin d'adapter (f1, f2) leur aménagement angulaire relatif à ladite configuration déterminée (C1, C2) des points d'injection (15a, 15a') du moule (15, 15'), sur ledit côté ou ladite surface (15b, 15b'), et
dans laquelle des moyens de fixation (22, 24) sont prévus pour fixer de manière stable les modules (11, 12, 13) de ladite plaque de distribution chaude (10) l'un par rapport à l'autre et par rapport à la structure dudit moule (15, 15'), une fois qu'ils ont été adaptés au plan angulaire (f1, f2) sur ladite configuration déterminée (C1, C2) des points d'injection (15a, 15a') du moule (15, 15'),
dans laquelle ledit module principal (11) comprend un corps principal (11a) de forme généralement allongée, sur l'intérieur duquel et le long duquel ledit canal chaud principal (11b) s'étend, **caractérisé en ce que** :
ledit corps principal (11a) définit, sur son extension longitudinale, un ou plusieurs sièges (11e) formés dans l'épaisseur dudit corps principal (11a), qui coupent ledit canal chaud principal (11b),
dans laquelle lesdits un ou plusieurs sièges (11e) logent un ou plusieurs corps de couplage respectifs (14) dans les zones où les premières extrémités (12b) des modules satellites (12) sont couplées à rotation audit module principal (11), chacun desdits un ou plusieurs corps de couplage (14) convenant pour mettre en communication le canal chaud principal (11b) dudit module principal (11) avec le canal intermédiaire (12a) du module satellite (12) couplé au module principal (11), et
dans laquelle lesdits un ou plusieurs sièges (11e) logent un ou plusieurs corps de fermeture respectifs (21) dans les zones du module principal (11) qui ne sont pas utilisées pour coupler à rotation lesdits un ou plusieurs modules satellites (12) audit module principal (11), lesdits un ou plusieurs corps de fermeture (21) étant à même de fermer les sièges respectifs (11e) dans lesquels ils sont logés de manière à empêcher toute évacuation vers l'extérieur de la matière plastique fondue (MF) qui s'écoule le long dudit canal chaud principal (11a).

2. Plaque de distribution chaude modulaire (10) selon la revendication 1, dans laquelle un seul module satellite (12) est prévu pour être intercalé entre ledit module principal (11) et le module d'injection correspondant (13) et pour se coupler à rotation, sur la première extrémité respective (12b) et autour dudit premier axe (Y), avec ledit module principal (11) et, sur la seconde extrémité respective (12c) opposée à la première extrémité, et autour dudit second axe (Y'), avec ledit module d'injection correspondant (13).

3. Plaque de distribution chaude modulaire selon la revendication 1 ou la revendication 2, dans laquelle lesdits sièges (11e) ont une forme cylindrique et présentent un diamètre plus important que celui du canal chaud principal (11b) formé intérieurement dans ledit module principal (11).

4. Plaque de distribution chaude modulaire (10) selon la revendication 1, dans laquelle chacun desdits un ou plusieurs modules satellites (12) est choisi parmi une pluralité de modules satellites ayant différentes longueurs définies par des valeurs distinctes, unifiées, de manière à couvrir une pluralité de moules (15, 15') présentant différents aménagements et différentes configurations (C1, C2) des points d'injection respectifs (15a, 15a').

5. Plaque de distribution chaude modulaire selon l'une quelconque des revendications précédentes, dans laquelle lesdits moyens de fixation (22, 24) comprennent une ou plusieurs vis (22a) associées à une ou plusieurs fentes circulaires respectives (23) qui sont formées coaxialement avec ledit premier axe de rotation (Y), dans la zone du couplage rotatif entre le module principal (11) et la première extrémité (12b) de chaque module satellite (12), et coaxialement avec ledit second axe de rotation (Y'), dans la zone du couplage rotatif entre la seconde extrémité (12c) du module satellite (12) et le module d'injection (13),
de sorte que lesdites fentes (23) conviennent pour permettre un mouvement angulaire relatif (f1, f2) entre les divers modules (11, 12, 13) couplés à rotation l'un à l'autre, tout en adaptant ladite plaque de distribution chaude (10) à ladite configuration déterminée (C1, C2) des points d'injection (15a, 15a') du moule (15, 15'), et le
sdites vis (22a) conviennent pour être serrées afin de fixer de manière stable les modules couplés (11, 12, 13) l'un à l'autre et à la structure dudit moule (15, 15'), une fois que la plaque de distribution chaude (10) a été adaptée à ladite configuration déterminée (C1, C2) des points d'injection (15a, 15a').

6. Plaque de distribution chaude modulaire selon la revendication 1, dans laquelle deux ou plusieurs modules satellites sont intercalés entre ledit module principal et l'un quelconque des modules d'injection pour mettre en communication le canal chaud, prévu dans ledit module principal, avec la buse d'éjection dudit un quelconque des modules d'injection, et dans laquelle lesdits deux ou plusieurs modules satellites sont couplés à rotation, à une extrémité respective, de manière à convenir pour tourner l'un par rapport à l'autre, tout en adaptant ladite plaque de distribution chaude au moule.

7. Plaque de distribution chaude modulaire (10) selon la revendication 1, dans laquelle les divers modules satellites (12) compris dans ladite plaque de distribution chaude (10) sont choisis dans un groupe constitué d'une pluralité de modules satellites de forme similaire, mais de longueurs différentes, correspondant aux valeurs unifiées, convenant pour couvrir une pluralité de moules (15, 15') qui présentent différentes configurations (C1, C2) des points d'injection respectifs (15a, 15a').

8. Moule (15, 15') pour le moulage par injection d'une matière plastique (MP) en intégrant une plaque de distribution chaude modulaire (10) selon l'une quelconque des revendications précédentes.

9. Procédé pour adapter une plaque de distribution chaude modulaire pour le moulage par injection d'une matière plastique (MP) dans un moule (15, 15') ayant une configuration déterminée (C1, C2) des points d'injection respectifs (15a, 15a'), le procédé comprenant les étapes suivantes consistant à :
a) mettre en oeuvre au moins un module principal (11) définissant, sur sa partie interne, un canal chaud principal respectif (11a) pour l'écoulement de la matière plastique fondue (MP), ledit module principal (11) comprenant un corps principal (11a) de forme généralement allongée, à l'intérieur duquel et le long duquel ledit canal chaud principal (11b) s'étend, ledit corps principal (11a) définissant, sur son extension longitudinale, un ou plusieurs sièges (11e) formés dans l'épaisseur dudit corps principal (11a) et qui coupent ledit canal chaud principal (11b) ;
b) mettre en oeuvre un ou plusieurs modules d'injection (13), chacun ayant une buse d'injection (13a) convenant pour recevoir la matière plastique fondue (MP) et pour l'injecter dans ledit moule (15, 15') ;
c) mettre en oeuvre un ou plusieurs modules intermédiaires ou modules satellites (12) ayant une forme sensiblement allongée et définissant chacun, sur sa partie interne, un canal chaud intermédiaire respectif (12a) pour l'écoulement de la matière plastique fondue (MP), chaque module satellite (12) convenant pour se coupler à rotation, aux extrémités (12b, 12c), audit module principal (11) et à un module d'injection correspondant (13), respectivement autour d'un premier (Y) et d'un second axe (Y') sensiblement perpendiculaires à un côté ou à une surface (15b, 15b'), sensiblement uni(e), dudit moule (15, 15'), présentant ladite configuration déterminée (C1, C2) des points d'injection (15a, 15a') du moule (15, 15'),
d) monter ledit module principal (11) sur ledit côté ou ladite surface (15b, 15b') du moule (15, 15') ;
e) monter lesdits un ou plusieurs modules d'injection (13) sur ledit côté ou ladite surface (15b, 15b') du moule (15, 15') dans les zones desdits points d'injection (15a, 15a') ;
f) intercaler lesdits un ou plusieurs modules satellites (12) entre ledit module principal (11) et lesdits un ou plusieurs modules d'injection (13), au moins un module satellite étant intercalé entre ledit module principal (11) et chaque module d'injection (13) ;
g) coupler et raccorder à rotation les extrémités (12a, 12b) desdits un ou plusieurs modules satellites (12) au module principal (11) et auxdits un ou plusieurs modules d'injection (13) de manière à mettre en communication, via les canaux chauds intermédiaires (12a) prévus dans les modules satellites (12), le canal chaud principal (11a), prévu dans le module principal (11), avec la buse d'injection (13a) de chaque module d'injection (13) ;
h) faire tourner, au cours du montage dudit côté ou de ladite surface (15b, 15b') du moule (15, 15'), lesdits un ou plusieurs modules satellites (12) et les modules d'injection (13), couplés à ceux-ci, l'un par rapport à l'autre et par rapport audit module principal (11), autour dudit premier (Y) et dudit second (Y') axes, sensiblement perpendiculaires audit côté ou à ladite surface (15b, 15b') du moule (15, 15') de manière à adapter (f1 f2) leur aménagement angulaire relatif à ladite configuration déterminée (C1, C2), sur ledit côté ou ladite surface (15b, 15b'), des points d'injection (15a, 15a') du moule (15, 15'), et enfin
i) fixer de manière stable les modules (12, 13) de ladite plaque de distribution chaude modulaire (10), une fois adaptée au plan du va-et-vient et au plan angulaire, l'un par rapport à l'autre et par rapport à la structure dudit moule (15, 15'),
dans lequel l'étape de couplage et de raccordement des extrémités desdits un ou plusieurs modules satellites (12) comprend l'étape de logement dans lesdits un ou plusieurs sièges (11e) du module principal (11) d'un ou plusieurs corps de couplage respectifs (14) dans les zones où les premières extrémités (12b) des modules satellites (12) sont couplées à rotation audit module principal (11), chacun desdits un ou plusieurs corps de couplage (14) convenant pour mettre en communication le canal chaud principal (11b) dudit module principal (11) avec le canal intermédiaire (12a) du module satellite (12) couplé au module principal (11), et
dans lequel un ou plusieurs corps de fermeture (21) est ou sont logés dans lesdits un ou plusieurs sièges (11e) dans les zones du module principal (11) qui ne sont pas utilisées pour coupler à rotation lesdits un ou plusieurs modules satellites (12) audit module principal (11), lesdits un ou plusieurs corps de fermeture (21) convenant pour fermer les sièges respectifs (11e) dans lesquels ils sont logés de manière à empêcher toute évacuation vers l'extérieur de la matière plastique fondue (MP) qui s'écoule le long dudit canal chaud principal (11a).

10. Procédé selon la revendication 9, dans lequel les divers modules satellites (12), destinés à être intercalés entre ledit module principal (11) et lesdits modules d'injection (13), tout en montant ladite plaque de distribution chaude modulaire (10) sur ledit côté ou ladite surface (15b, 15b') du moule (15, 15'), sont choisis dans un groupe constitué d'une pluralité de modules satellites de forme similaire, mais de longueurs différentes, correspondant à des valeurs unifiées convenant pour couvrir une pluralité de moules (15, 15') présentant différentes configurations (C1, C2) des points d'injection respectifs (15a, 15a').
